Europäisches Patentamt

European Patent Office

Office européen des brevets

(11) Veröffentlichungsnummer: **0 084 614**
**A1**

(12) **EUROPÄISCHE PATENTANMELDUNG**

(21) Anmeldenummer: **82110253.0**

(22) Anmeldetag: **06.11.82**

(51) Int. Cl.³: **G 05 D 23/24, F 24 H 9/20**

(30) Priorität: **23.01.82 DE 3202128**

(43) Veröffentlichungstag der Anmeldung: **03.08.83**
**Patentblatt 83/31**

(84) Benannte Vertragsstaaten: **CH FR GB IT LI SE**

(71) Anmelder: **DIETER GRÄSSLIN Feinwerktechnik, Bundesstrasse 36, D-7742 St. Georgen (DE)**

(72) Erfinder: **Kammerer, Gerd, Schiltachweg 15, D-7742 St. Georgen (DE)**

(74) Vertreter: **Thoma, Friedrich Xaver, Dipl.-Ing., Leimengrubweg 12, D-7612 Haslach i.K. (DE)**

(54) **Aufladesteuerung für elektrische Speicherheizungen.**

(57) Bei einer Aufladesteuerung für elektrische Speicherheizungen, insbesondere mit einer Zeitsteuereinrichtung zur Verschiebung und/oder Begrenzung der Ladezeitdauer einer Restwärmeerfassung und mit einer von der Außentemperatur abhängigen Regelung der Lademenge ist ein Schwellwertschalter (3) vorgesehen, der mittelbar über einen Verstärker (4) oder unmittelbar einen elektrischen Stufenschalter (8) steuert, der in der Energieversorgungsleitung (10) des Heizkreises der Speicherheizung (13) angeordnet ist, daß der Schwellwertschalter (3), wird er vorrangig von einem von einer bestimmten Außentemperatur verursachten Steuersignal beaufschlagt, eine insbesondere stufenweise Änderung der elektrischen Ladeleistung bewirkt und gleichzeitig damit eine Änderung der Ladezeitdauer durch die Zeitsteuereinrichtung und/oder die Restwärmeerfassung (2) vorgenommen wird.

0084614

## Aufladesteuerung für elektrische Speicherheizungen.

Bekanntlich regelt eine Aufladesteuerung die Lademenge einer elektrischen Speicherheizung innerhalb festgelegter Zeitgrenzen, die von den Elektrizitätsversorgungsunternehmen vorgegeben werden. Die, der Speicherheizung zuzuführende, Lademenge ist dabei im wesentlichen von der Außentemperatur, der Restwärme und dem jeweiligen Wärmebedarf abhängig. Die Einstellung der Arbeitskennlinie einer derartigen Aufladesteuerung erfolgt dort deßhalb durch die jeweilige Anpassung an die Außentemperatur, ab der, einerseits der maximale Wärmebedarf und andererseits die minimale Heizleistung gefordert wird.

Bei den bekannten Aufladesteuerungen, bei denen beispielsweise der Ladebeginn bei +20°C und eine Volladung bei einer Außentemperatur von -15°C erfolgen, wird auch bei einer Außentemperatur von beispielsweise +15°C eine Stunde lang mit voller elektrischer Anschlußleistung aufgeladen. Diese Art der Aufladung mit voller Anschlußleistung insbesondere bei hohen Außentemperaturen und über einen relativ kurzen Zeitraum ist durch die kurzfristige starke Belastung der Netze von großem Nachteil und erfordert zur Deckung solcher Belastungen von den EVU's teuere Spitzenkraftwerke.

Der Erfindung liegt deßhalb die Aufgabe zugrunde, eine Aufladesteuerung zu schaffen, die diesen Nachteil beseitigt und die eine außentemperaturabhängig geregelte Aufladung einer Speicherheizung mit der erforderlichen Lademenge über einen größtmöglichen Zeitraum innerhalb der festgelegten Zeitgrenzen, bei einer kleinstmöglichen elektrischen Anschlußleistung ermöglicht.

Diese Aufgabe wird erfindungsgemäß dadurch gelöst, daß insbesondere ein Schwellwertschalter vorgesehen ist, der mittelbar über einen Verstärker oder unmittelbar einen elektrischen Stufenschalter steuert, der in der elektrischen Energieversorgungsleitung des Heizkreises der Speicherheizung angeordnet ist, daß der Schwellwertschalter, wird er vorrangig von einem, von einer bestimmten Außentemperatur verursachten, Steuersignal beaufschlagt, eine insbesondere stufenweise Änderung der elektrischen Ladeleistung über den Stufenschalter bewirkt, und daß gleichzeitig mit der Änderung der Ladeleistung eine Änderung der Ladezeitdauer an der Zeitsteuereinrichtung vorgenommen wird.

Ein Ausführungsbeispiel der Erfindung, sowie Diagramme mit Ladekennlinien für verschiedene Auflademöglichkeiten sind in der Zeichnung dargestellt und werden im folgenden näher erläutert. Es zeigen

Fig. 1  ein Blockschaltbild einer Aufladesteuerung nach der Erfindung,

Fig. 2  ein Diagramm mit Ladekennlinien in Abhängigkeit von der Aussentemperatur und der Ladezeit für eine rückwärtsverschobene Nachtaufladung,

Fig. 3  ein Diagramm mit Ladekennlinien in Abhängigkeit von der Aussentemperatur und der Ladezeit für eine Tagaufladung mit Zeiteinfluß,

Fig. 4  ein Diagramm mit Ladekennlinien in Abhängigkeit von der Aussentemperatur und der Ladezeit für eine Nachtaufladung mit Mittelspreizung,

Fig. 5  ein Diagramm mit Ladekennlinien in Abhängigkeit von der Aussentemperatur und der Ladezeit für eine Nachtaufladung mit Vorwärtssteuerung,

Fig. 6  ein Diagramm mit Ladekennlinien in Abhängigkeit von der Aussentemperatur und der Ladezeit für eine Tagaufladung ohne Zeiteinfluß,

Fig. 7  ein Diagramm mit Ladekennlinien ohne Zeiteinfluß mit Außentemperaturabhängigkeit.

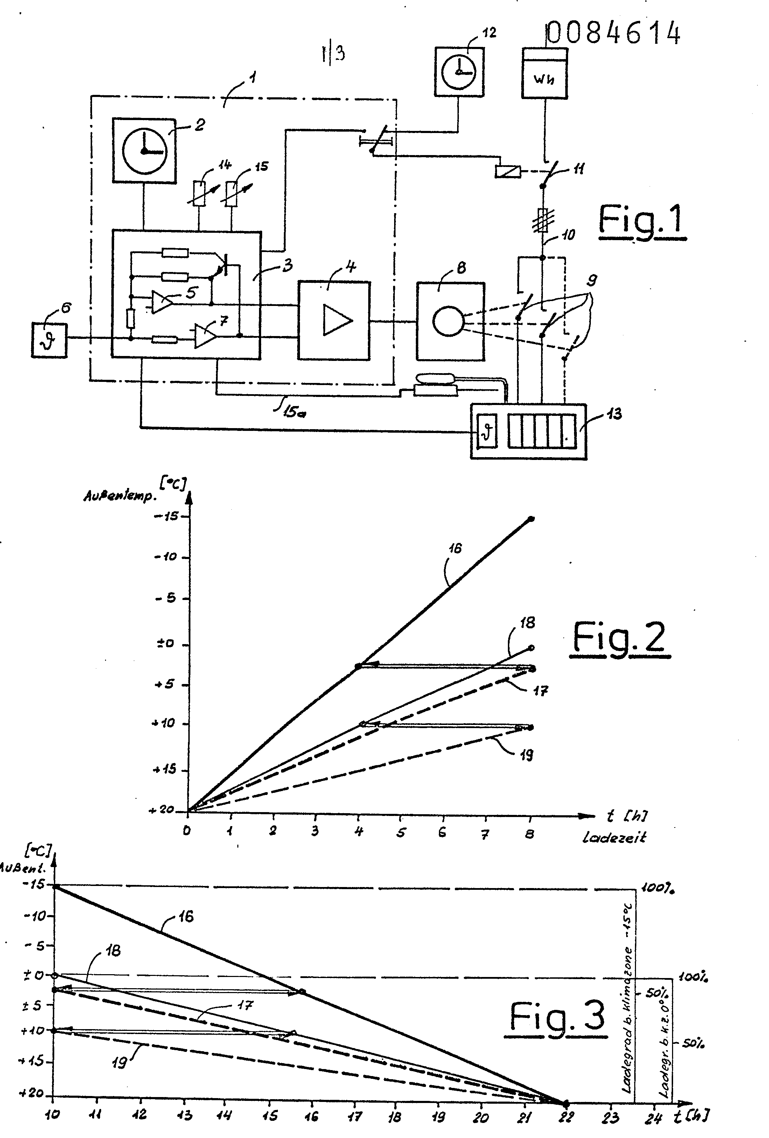

In der Fig. 1 ist mit 1 eine Aufladesteuerung strichpunktiert zusammengefaßt, die im wesentlichen aus einer Zeitsteuereinrichtung 2 und/oder einer Schaltuhr, einem elektronischen Schwellwertschalter 3 und erforderlichenfalls aus einem Verstärker 4 gebildet ist.

Der Schwellwertschalter 3 ist dort einerseits mit einem Verstärker 5 versehen, der von einem außentemperaturabhängigen Signal aus dem Aussentemperaturfühler 6 beaufschlagt wird. Dieser Verstärker 5 ist insbesondere mit einer umschaltbaren Verstärkereinstellung ausgestattet. Andererseits ist dort ein weiterer Verstärker 7 vorgesehen, der als Schaltschwelle für die Ansteuerung des Stufenschalters 8 geschaltet ist und an dem auch eine Kennlinienumschaltung vorgenommen werden kann.

Der Stufenschalter 8 kann unmittelbar oder mittelbar über den Verstärker 4 beaufschlagt werden. Insbesondere kann im Verstärker 4 auch die Schaltlogik für die leistungsabhängige Steuerung (1/1 oder 1/2 oder 1/3 Last) der Speicherheizung untergebracht sein, die den Stufenschalter 8 beaufschlagt. 9 bezeichnet Schützkontakte für die einzelnen elektrischen Ladekreise. 10 kennzeichnet die elektrische Energieversorgungsleitung und 11 ist ein Schützschalter, der von einer Schaltuhr 12 angesteuert wird, die insbesondere die Zeitgrenzen festlegt, die das Elektrizitätsversorgungsunternehmen vorgibt. Unabhängig von dieser Schaltuhr kann natürlich auch eine Tagaufladung vorgenommen werden, indem der Schützschalter 11 unmittelbar von der Aufladesteuerung 1 angesteuert wird. 13 zeigt die elektrische Speicherheizung, deren Restwärme über einen Fühler aufgenommen, der Aufladesteuerung 1 als Steuersignal zugeführt werden kann. 15a zeigt eine Steuerleitung, die statt des unter 13 beschriebenen Fühlers für die Restwärme eine Führungsgröße zum Regler des Speicherheizgerätes überträgt. 14 zeigt einen Regler an der Aufladesteuerung 1, an dem der Ladebeginn vorgewählt werden kann und 15 zeigt einen zweiten Regler, an dem die Ladungsgröße eingestellt werden kann.

Die Aufladesteuerung 1 kann sowohl manuell als auch vollautomatisch und/oder außentemperaturabhängig eine Umschaltung von einer Ladekennlinie auf die andere Ladekennlinie durchführen.

Die Fig. 2 zeigt ein Diagramm mit Ladekennlinien, aus denen die erfindungsgemäße Lösung bei einer sogenannten rückwärtsverschobenen Nachtaufladung klar ersichtlich ist. Die Kennlinie 16 zeigt dort einen

Aufladebeginn bei + 20$^{o}$C und Volladung bei -15$^{o}$C. Die Aufladung soll dort bis zu einer Außentemperatur von +2,5$^{o}$C mit 1/2 elektrischer Leistung nach der Kennlinie 17 erfolgen. Ab Außentemperaturen unter +2,5$^{o}$C erfolgt eine selbsttätige Umschaltung der Kennlinie durch den Schwellwertschalter 3, und es wird nunmehr bis Außentemperaturen von -15$^{o}$C nach der Kennlinie 16, d.h. mit voller elektrischer Leistung aufgeladen.

Wird die Kennlinie 18 gewählt, mit einem Aufladebeginn bei +20$^{o}$C und einer Volladung bei $\pm$0$^{o}$C, dann erfolgt nach der zugehörigen Kennlinie 19 eine Aufladung mit 1/2 elektrischer Leistung bis +10$^{o}$C und ab +10$^{o}$C bis $\pm$0$^{o}$C wird mit voller elektrischer Leistung aufgeladen, indem bei +10$^{o}$C wiederum eine selbsttätige Umschaltung von einer Kennlinie auf die andere erfolgt

Es ist selbstverständlich, daß über einen derartigen Kennlinienverlauf, wie er zuvor geschildert wurde, auch mehr als nur zwei Schwellen vorgesehen sein können.

Dieselben Kennlinienumschaltungen, wie die in der Fig. 2 geschilderten, bieten sich auch für eine sogenannte Tagaufladung mit einem Zeiteinfluß an, wie dies im Diagramm der Fig. 3 sichtbar ist.

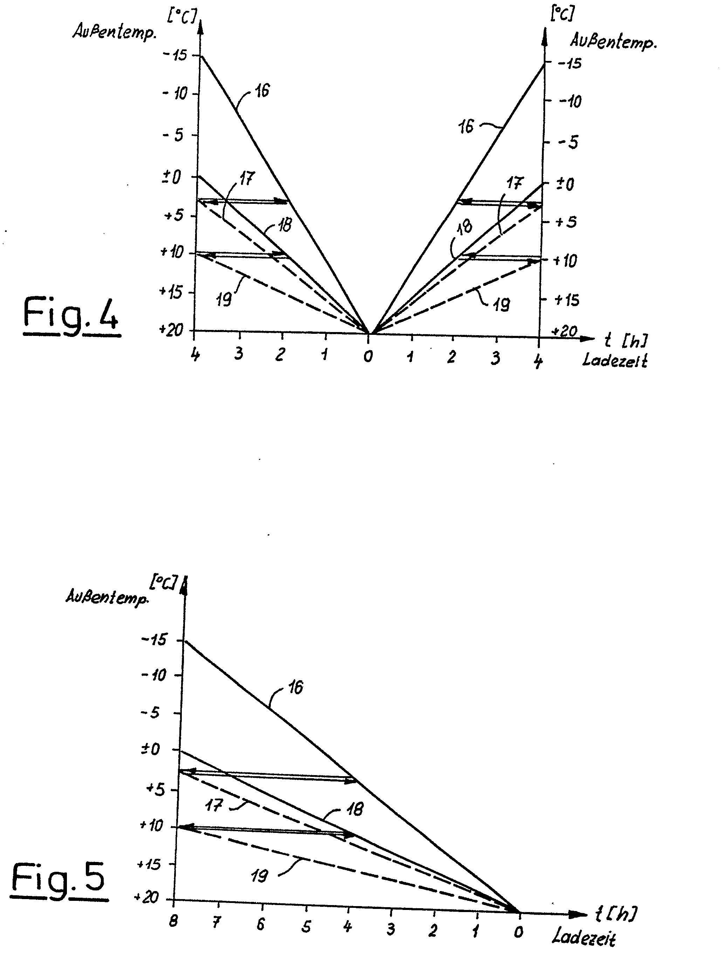

Auch bei einer Nachtaufladung mit sogenannter Mittelspreizung, wie dies aus dem Diagramm der Fig. 4 ersichtlich ist, kann eine selbstständige Kennlinienumschaltung in Abhängigkeit von einer bestimmten Außentemperatur vorgenommen werden.

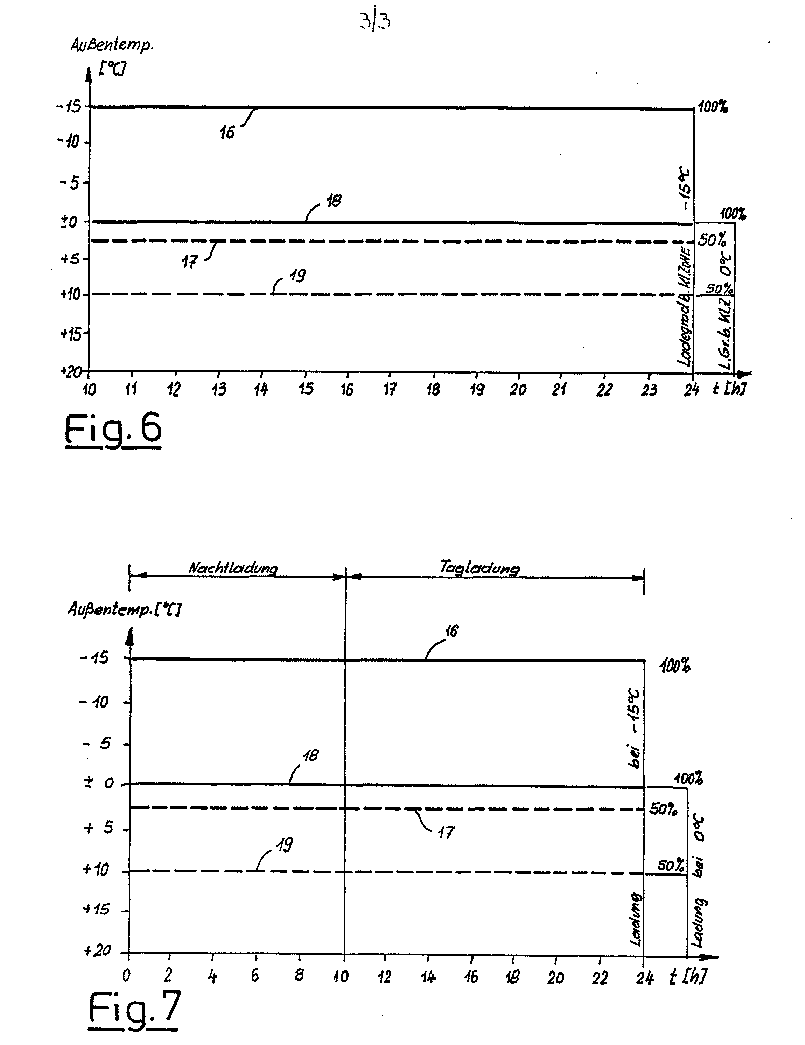

Die Fig. 5 zeigt den Kennlinienverlauf bei einer Nachtaufladung mit sogenannter Vorwärtssteuerung und Fig. 6 zeigt ein Diagramm mit einem Kennlinienverlauf einer Aufladesteuerung nach der Erfindung, bei einer sogenannten Tagaufladung ohne einen Zeiteinfluß. Auch hier kann eine selbsttätige Umschaltung der elektrischen Leistung bewirkt werden wie dies zuvor bereits näher erläutert wurde.

Es liegt im Rahmen der Erfindung, daß die Steilheit einer Ladekenn-

linie, insbesondere der Kennlinien 16 und 17 einstellbar ist. In jedem Falle erfolgt die Umschaltung von einer Kennlinie auf die andere selbsttätig. Dies kann außentemperatur- oder witterungsabhängig oder durch eine gezielte Ansteuerung von außen erfolgen, z.B. durch einen EVU Kundenkontakt.

Ebenso liegt es im Rahmen der Erfindung, daß Aufladesteuerungen ohne Zeitsteuereinrichtung (nur Restwärme- und Witterungsabhängigkeit) mit der in der Erfindung genannten Umschaltung ausgerüstet werden.

Patentansprüche

1. Aufladesteuerung für elektrische Speicherheizungen wahlweise mit einer Zeitsteuereinrichtung zur Verschiebung und/oder Begrenzung der Ladezeitdauer einer Restwärmeerfassung und mit einer außentemperaturabhängigen Regelung der Lademenge, dadurch gekennzeichnet, daß insbesondere ein Schwellwertschalter (3) vorgesehen ist, der mittelbar über einen Verstärker (4) oder unmittelbar einen elektrischen Stufenschalter (8) steuert, der in der Energieversorgungsleitung (10) des Heizkreises der Speicherheizung (13) angeordnet ist, daß der Schwellwertschalter (3), wird er vorrangig von einem, von einer bestimmten Außentemperatur verursachten, Steuersignal beaufschlagt, eine insbesondere stufenweise Änderung der elektrischen Ladeleistung über den Stufenschalter (8) bewirkt, und daß gleichzeitig mit der Änderung der Ladeleistung eine Änderung der Ladezeitdauer durch die Zeitsteuereinrichtung und/oder die Restwärmeerfassung (2) vorgenommen wird.

2. Aufladesteuerung nach Anspruch 1, dadurch gekennzeichnet, daß bei einer Halbierung der Ladeleistung eine Verdoppelung der Ladezeitdauer vorgesehen ist.

3. Aufladesteuerung nach Anspruch 1 und 2, dadurch gekennzeichnet, daß die Umschaltung von der einen Ladeleistung auf eine andere Ladeleistung selbsttätig, insbesondere außentemperatur- und witterungsabhängig erfolgt.

4. Aufladesteuerung nach Anspruch 1 und 2, dadurch gekennzeichnet, daß die Umschaltung von der einen Ladeleistung auf eine andere Ladeleistung durch eine gezielte Ansteuerung von außen erfolgt.

5. Aufladesteuerung nach den Ansprüchen 1, 2 und 3, dadurch gekennzeichnet, daß eine von der Aufladesteuerung ausgegebene Führungsgröße (15a) entsprechend der Ladeleistungsumschaltung gleichzeitig entsprechend geändert wird.

6. Aufladesteuerung nach den Ansprüchen 1, 2 und 3, dadurch gekennzeichnet,

0084614

daß der Umschaltpunkt der Ladeleistung, sowie der Ladekennlinie einstellbar ist.

0084614

**Fig.1**

**Fig.2**

**Fig.3**

**Fig.4**

**Fig.5**

Fig. 6

Fig. 7

Europäisches
Patentamt

**EUROPÄISCHER RECHERCHENBERICHT**

0084614

Nummer der Anmeldung

EP 82 11 0253

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X,Y | DE-A-2 604 368 (CREDA ELECTRIC LTD.) <br> * Seite 10, Zeile 28 - Seite 11, Zeile 23; Abbildungen 4,6 * <br> --- | 1-3,5, 6 | G 05 D 23/24 <br> F 24 H 9/20 |
| Y | DE-A-1 588 288 (W. HOLZER) <br> * Seite 3, Zeilen 9-11; Seite 7, Zeile 20 - Seite 8, Zeile 12; Abbildung 1 * <br> --- | 2 | |
| Y | DE-A-1 964 238 (SIMPLEX) <br> * Seite 23, Zeilen 21-31; Abbildungen 1,2 * <br> ----- | 4 | |
| | | | RECHERCHIERTE SACHGEBIETE (Int. Cl. ³) <br><br> G 05 D <br> F 24 H |

Der vorliegende Recherchenbericht wurde für alle Patentansprüche erstellt.

| Recherchenort <br> DEN HAAG | Abschlußdatum der Recherche <br> 29-04-1983 | Prüfer <br> HELOT H.V. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82